# NEUE EUROPÄISCHE PATENTSCHRIFT

(11) **EP 1 359 039 B2**
(45) Veröffentlichungstag und Bekanntmachung des Hinweises auf die Entscheidung über den Einspruch: **23.09.2009**
(45) Hinweis auf die Patenterteilung: 21.03.2007
(21) Anmeldenummer: 03007483.5
(22) Anmeldetag: 07.04.2003
(51) Int. Cl.: B60J 7/14

(54) **Cabriolet-Fahrzeug mit zumindest zwei starren Dachteilen**
Convertible vehicle with at least two rigid roof elements
Véhicule convertible comprenant au moins deux parties de toit rigides

(30) Priorität: 23.04.2002 DE 10217917
(43) Veröffentlichungstag der Anmeldung: 05.11.2003
(73) Patentinhaber: Wilhelm Karmann GmbH, 49084 Osnabrück (DE)
(72) Erfinder: Eichholz, Stefan, 49163 Bohmte (DE); Budzinski, Thorsten, 49252 Lengerich (DE)
(74) Vertreter: Pott, Ulrich

(56) Entgegenhaltungen:
- EP-A- 0 835 780
- DE-A- 10 020 663
- DE-A- 10 108 493
- DE-A- 19 846 006
- DE-C- 4 326 329
- DE-C- 4 435 222
- DE-C- 19 957 427
- DE-C1- 10 006 296
- DE-C1- 19 714 104
- DE-U1- 29 620 468

## Beschreibung

Die Erfindung betrifft ein Cabriolet-Fahrzeug.

Das Dokument DE 19714104 C1 offenbart ein mehrteiliges Fahrzeugdach mit einem in einen Verdeckkastendeckel integrierten Überrollbügel. In einer ersten Bewegungsphase zu Beginn der Öffnungsbewegung des Fahrzeugdaches wird zunächst der Deckel des vorderen Dachelementes mittels eines elektrischen Antriebes nach hinten unter das nachfolgende Dachelement geschoben.

Danach wird mittels eines besonderen Antriebes das rückwärtige Dachelement aufgeschwenkt, wobei gleichzeitig das mittlere Dachelement, unter das zuvor die vordere Klappe geschoben wurde, nach unten unter das rückwärtige Heckelement in eine Zwischenstellung aufgeschwenkt, in welcher es im wesentlichen vertikal nach oben weist und das mittlere Dachelement in dieser Zwischenelement vollständig vor dem rückwärtigen Heckelement liegt. Danach wird dieses ineinander geschaltete Dachpacket in die Ablagestellung des Dachs verschwenkt.

Aus der DE 196 42 152 A1 ist ein Kraftfahrzeug mit drei starren Dachteilen bekannt, die raumsparend im Verdeckkasten angeordnet werden sollen. Hierfür wird in einer ersten Bewegungsphase das gesamte Dach mit fluchtend hintereinanderliegenden Dachteilen abwärts verschwenkt, wodurch der rückwärtige Dachabschluß weit in die Karosserie hineinragt und Gefahr läuft, dort mit Karosserieteilen zu kollidieren. Um dies zu verhindern, ist die Heckscheibe einzeln verschwenkbar, wofür gesonderte Antriebsorgane vorgesehen sind. Es kann daher in einem ersten Schritt zunächst die Heckscheibe im Verdeckkasten abgelegt werden, ehe das Dach insgesamt abwärts verschwenkt wird. Sofern sich die Heckscheibe bis zum hinteren Dachabschluß erstreckt, ragen dann nur noch seitlich neben der Scheibe liegende Bereiche des hinteren Dachteils beim Einschwenken weit nach unten, die etwa in Taschen neben den Radhäusern aufgenommen werden können, so daß die Kollisionsgefahr vermindert ist. Hierfür ist jedoch ein zusätzlicher Aufwand erforderlich. Zudem ist durch das Aufschwenken des Gesamtdaches während des Schwenkvorgangs vorübergehend eine erhebliche Fahrzeughöhe erreicht, die insbesondere in Garagen zu einem Anschlagen des Daches an die Raumdecke führen kann. Des weiteren wird durch die gesondert abgelegte Heckscheibe zusätzlicher Raum im Fahrzeug benötigt.

Aus der DE 44 35 222 C ist ein Cabriolet-Fahrzeug der eingangs genannten Art bekannt, das ein mehrfach umwandelbares Fahrzeugdach aufweist. Das Fahrzeugdach hat ein hinteres Dachteil und ein davor gelegenes Dachteil, das nach Art eines Aufstell- und Schiebeverdeckes eine relativ zu diesem Dachteil bewegbare Klappe aufweist. Zum vollständigen Öffnen des Daches ist das hintere Dachteil hoch zu stellen, wonach das davor gelegene Dachteil mitsamt der Klappe unter dieses hintere Dachteil bewegt werden kann. Das so gebildete Paket kann dann durch eine Abwärtsbewegung nach Öffnen einer entsprechenden Heckklappe in einen rückwärtigen Fahrzeugbereich verbracht und dort abgelegt werden. Nachteilig hierbei ist, daß ein Öffnungsquerschnitt zum Ablegen des Dachpaketes zur Verfügung zu stellen ist, der durch die horizontalen Abmessungen des die Klappe aufweisenden abzulegenden Dachteils bestimmt wird.

Aus der DE 199 57 427 C ist ein ähnlicher Dachaufbau wie aus der vorgenannten DE 44 35 222 bekannt, wobei zusätzlich noch besondere Elemente eines Zwangssteuerungsmechanismus zum Öffnen und Schließen der Dachanordnung vorgesehen sind. Jedoch ist auch hier wiederum eine relativ große Öffnung zum Ablegen des Daches zur Verfügung zu stellen, die durch die Längs- und Querabmessungen des die Klappe aufweisenden Dachteils bestimmt wird.

Aus der DE 43 26 329 C ist ein Cabriolet-Fahrzeug in einer Ausgestaltung bekannt, die den Cabriolet-Fahrzeugen aus den beiden vorgenannten Schriften zum Stand der Technik ähnelt. Auch hier ist ein vor einem hinteren Dachbereich gelegener Dachabschnitt unter den hinteren Dachbereich zu bewegen und kann dann mit diesem abgesenkt werden, wonach der hintere Dachbereich die oberseitige Abdeckung für das Dachpaket bildet. Dies vermittelt ein unschönes äußeres Erscheinungsbild im geöffneten Zustand des Daches, da durch die Heckscheibe das abgelegte Paket sichtbar bleibt. Auch die Ablageöffnung ist wiederum entsprechend groß zu dimensionieren.

Es ist Aufgabe der vorliegenden Erfindung, ein Cabriolet-Fahrzeug der eingangs genannten Art hinsichtlich der Dach- und Ablagegeometrie zu verbessern.

Die Erfindung löst diese Aufgabe durch ein Cabriolet-Fahrzeug mit den Merkmalen des Anspruches 1. Vorteilhafte Weiterbildungen und Ausgestaltungen der Erfindung ergeben sich aus den Ansprüchen 2 bis 6.

Mit der erfindungsgemäßen Ausbildung ist ein gesonderter Antrieb für eine Heckscheibe entbehrlich. Dieser kann fest in das rückwärtige Dachteil eingebunden sein, was zusätzliche Baugruppen entbehrlich macht und die Steuerung des Verdeckablegens und -schließens vereinfacht. Der für das abgelegte Dach benötigte Bauraum ist minimiert. Durch das Schwenken der starren Dachteile in eine zunächst etwa vertikale bzw. nur leicht zur Vertikalen geneigten Stellung, aus der diese nur noch ein wenig zurückschwenkt und über eine 90°-Stellung herausbewegt werden, ist der Öffnungsquerschnitt für das abzulegende Dachpaket außerordentlich klein zu halten, da zu Beginn eines Ablegevorganges das im wesentlichen vertikal aufgerichtete Dach durch die Öffnung zu bewegen ist und dieses erst im Verlaufe der Ablagebewegung durch die Öffnung hindurch erst innerhalb des Dachablageraumes in die horizontale Packstellung gebracht wird.

Dabei ergibt sich keine Stellung, in der das Dach als Gesamtheit mit einem vorderen Ende aufwärts verschwenkt wäre. Somit kann das Dachöffnen und - schließen auch in Garagen in aller Regel durchgeführt werden.

Wenn besonders vorteilhaft bei abgelegtem Dach und Freigabe einer Aufnahmeöffnung für Gepäck das abgelegte Dach aufwärtsbeweglich ist, können auch größere Gepäckstücke eingebracht werden, die dann unterhalb des abgelegten Daches auch bei wieder vollständig abgelegtem Dach halterbar sind. Durch das leichte Anheben des Daches ist die Zugangsöffnung zu diesem Raum vergrößert. Insbesondere ergibt sich ein sehr großer Zugang, wenn das abgelegte Dach mit seinem vorderen Ende aufwärts und gleichzeitig in Fahrtrichtung vorwärts verlagerbar ist. Dann können beispielsweise auch solche Hartschalenkoffer oder ähnliche sperrige Gepäckstücke eingebracht werden, deren Höhenerstreckung den Raum unterhalb des abgelegten Daches im wesentlichen vollständig einnimmt.

Weitere Vorteile und Einzelheiten der Erfindung ergeben sich aus einem nachfolgend beschriebenen und in der Zeichnung dargestellten Ausführungsbeispiel des Gegenstandes der Erfindung. In der Zeichnung zeigt:
- Fig. 1: ein erfindungsgemäßes Cabriolet-Fahrzeug bei geschlossenem Dach und bereits geöffnetem Deckelteil zur Abdeckung eines Dachaufnahmebereichs, dargestellt in abgebrochener, schematischer Seitenansicht,
- Fig. 2: eine ähnliche Ansicht wie Fig. 1 während der ersten Bewegungsphase der Dachöffnung, in der die Dachteile aufwärts verschwenken und gleichzeitig ineinander verschachtelt werden,
- Fig. 3: eine ähnliche Ansicht wie Fig. 2 am Ende der ersten Bewegungsphase, bei der die Dachteile insgesamt in eine gegenüber der Vertikalen nur wenig geneigte Stellung verschwenkt sind und vollständig ineinander geschachtelt sind, so daß sich ein insgesamt abzulegendes Paket ergibt,
- Fig. 4: eine ähnliche Ansicht wie Fig. 3 während der Abwärtsverlagerung des Dachteilepakets in den Dachaufnahmeraum,
- Fig. 5: eine ähnliche Ansicht wie Fig. 4 bei vollständig abgelegtem Dach und noch geöffnetem Deckelteil zur Freigabe der Durchtrittsöffnung für das Dach,
- Fig. 6: eine ähnliche Ansicht wie Fig. 5 bei vollständig abgelegtem Dach und darüber geschlossenem Deckelteil,

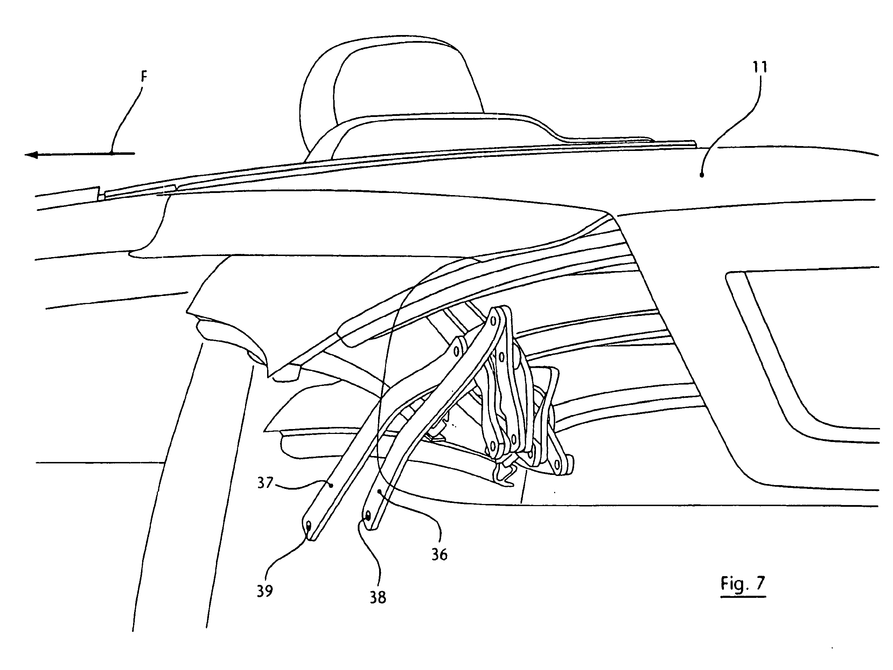

- Fig. 7: eine schematische Ansicht von schräg hinten auf das Cabriolet-Fahrzeug im Dachablagezustand nach Fig. 6,
- Fig. 8: eine Ansicht des Cabriolet-Fahrzeugs bei abgelegtem Dach und zur Freigabe einer Durchtrittsöffnung für Gepäck geöffnetem Deckelteil, wobei das Dach leicht vorwärts und aufwärts verlagert ist.
- Fig. 9: eine schematische Ansicht des abgelegten Dachpakets bei geöffnetem Deckelteil zur Freigabe der Durchtrittsöffnung für Gepäck ohne Verlagerung der Dachteile,
- Fig. 10: eine ähnliche Ansicht wie Fig. 9 mit Verlagerung der Dachteile.

Das im Ausführungsbeispiel dargestellte Cabriolet-Fahrzeug 1 umfaßt eine Fahrzeugkarosserie 2, die einen Fahrgastinnenraum 3 für vordere und hintere Insassen bietet. Dieser Innenraum 3 wird von einem insgesamt mit 4 bezeichneten Dach überdeckt. Das Dach 4 ist dreiteilig ausgebildet und umfaßt ein rückwärtiges Dachteil 5, in das eine Heckscheibe 6 eingebettet ist, sowie ein gegenüber dem rückwärtigen Dachteil 5 weiter vorne liegendes mittleres Dachteil 7 und ein vorderstes Dachteil 8. Die dreiteilige Dachausbildung ist nicht zwingend. Insbesondere ist beispielsweise bei einem Insassenraum, der nur eine Sitzreihe umfaßt, auch eine zweiteilige Dachausbildung hinreichend.

Die Dachteile 5, 7, 8 können insgesamt starr ausgebildet sein, beispielsweise aus Kunststoff, einem metallischen Werkstoff, auch einem metallischen Schaumwerkstoff, oder dergleichen. Auch ist es möglich, daß die Dachteile 5, 7, 8 jeweils nur als starre Rahmenteile ausgebildet sind und jeweils von einem textilen Bezug überspannt sind.

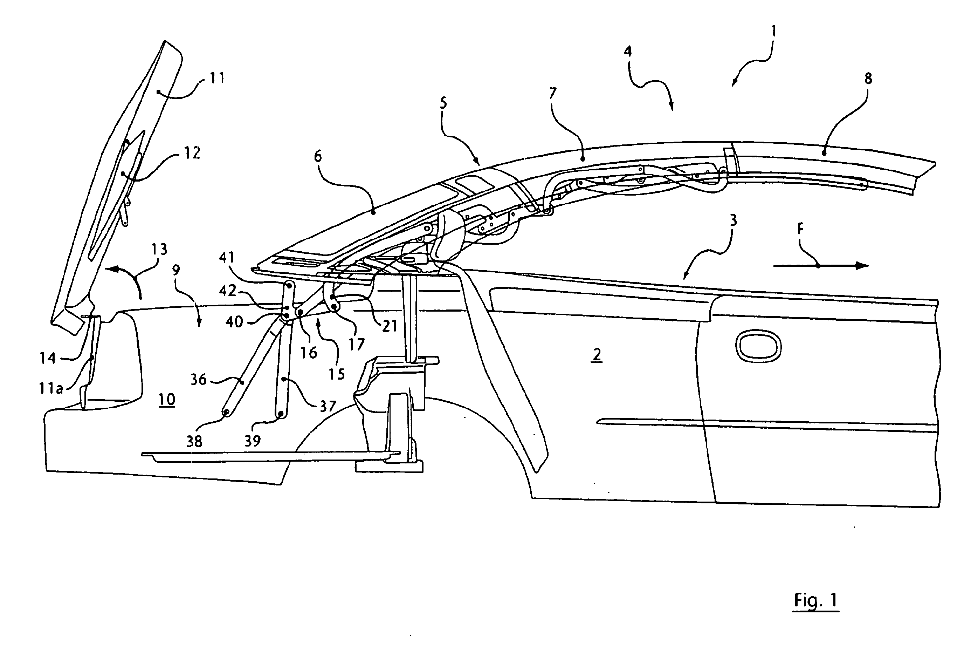

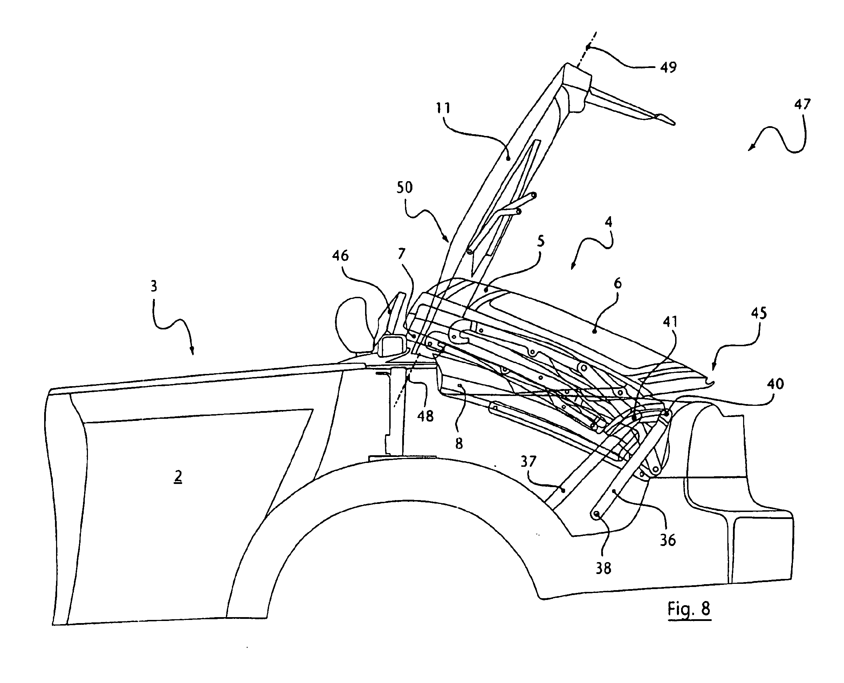

Das Dach 4 ist insgesamt im rückwärtigen Bereich der Karosserie 2 in einem Dachaufnahmeraum 9 ablegbar, der bei geschlossenem Dach 4 als Teil des Kofferraums 10 nutzbar ist. Der Dachaufnahmeraum 9 und der Kofferraum 10 sind insgesamt von einem Deckelteil 11 oberseitig abdeckbar, das in einem ersten Öffnungssinn zur Freigabe der Durchtrittsöffnung für das Dach 4 aufschwenkbar ist (Fig. 1) und in einem zweiten Öffnungssinn zur Freigabe einer Durchtrittsöffnung für Gepäck aufschwenkbar ist (Fig. 8 bis 10).

Das Deckelteil 11 kann eine Erweiterung 12 umfassen, die bei geöffnetem Dach und geschlossenem Deckelteil nach vorne ausfahrbar ist, um den Spaltraum für den Dachdurchtritt zu schließen.

Zum Öffnen des Daches wird zunächst das Deckelteil 11 aus einer Horizontallage in Richtung des Pfeils 13 um die heckseitige Querachse 14 aufgeschwenkt. Im Ausführungsbeispiel ist das Deckelteil 11 an der Achse 14 geteilt, so daß ein Vertikalbereich 11 a des Deckelteils 11 bei der genannten Aufschwenkbewegung stehen bleiben kann und lediglich der Horizontalbereich des Deckelteils 11 aufschwenkt. Diese Teilung ist allerdings nicht zwingend. Auch eine einteilige Ausbildung des Deckelteils 11 ist möglich.

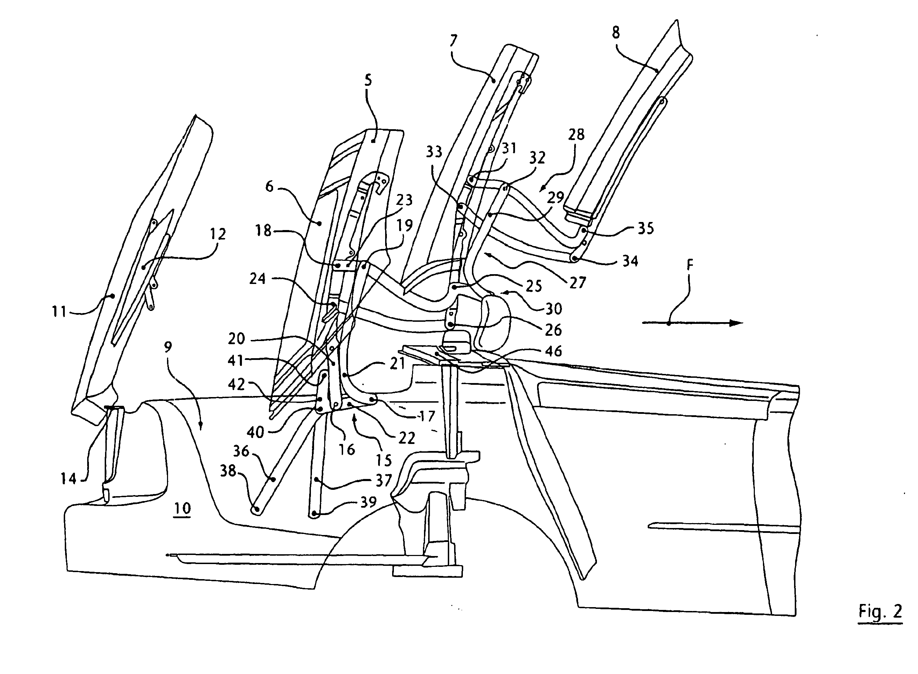

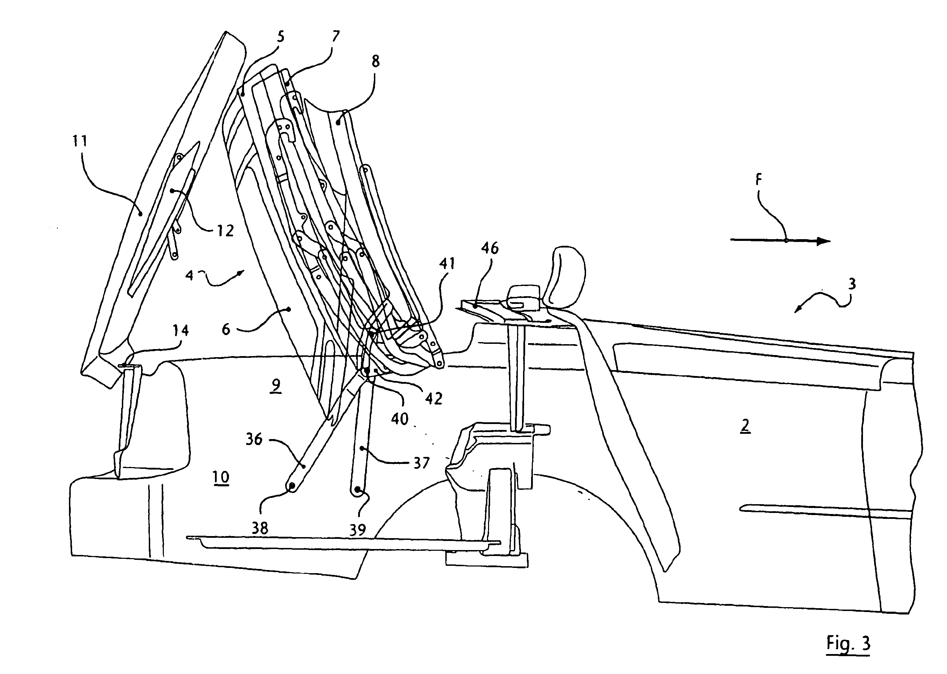

In einer ersten Bewegungsphase zur Dachöffnung (Fig. 2, Fig. 3) wird das rückwärtige Dachteil 5 um ein Hauptlager 15 im oberen Karosseriebereich aufgeschwenkt. Dieses Hauptlager 15 bildet für das rückwärtige Dachteil 5 ein Viergelenk aus, das gebildet ist durch die Gelenkpunkte 16, 17, 18, 19 und die diese verbindenden Lenker 20, 21 sowie 22 und 23, wobei die Lenker jeweils eigenständige Bauteile oder Teilbereiche von weiter erstreckten Lenkern sein können.

Mit dem Aufschwenken des hinteren Dachteils 5 ist gleichzeitig ein Aufschwenken der vorderen Dachteile 7 und 8 verbunden, die nicht selbständig an der Karosserie 2 gehalten sind, sondern untereinander und mit dem hinteren Dachteil 5 verbunden sind.

Der Lenker 21 dient als Steuerstange für die Bewegung eines zweiten Viergelenks, gebildet durch die Gelenkpunkte 18, 24, 25, 26, über das das mittlere Dachteil 7 an dem hinteren Dachteil 5 angebunden ist. Somit wird durch Verschwenkung des hinteren Dachteils 5 gleichzeitig eine Parallelstellung des mittleren Dachteils 7 und dessen Schachtelung in dem gewölbten Innenraum des hinteren Dachteils 5 bewirkt.

Gleichzeitig wird in gleicher Weise das vordere Dachteil 8 gegenüber dem mittleren Dachteil 7 in Parallelstellung geschwenkt und in dieses eingeschachtelt. Hierfür dienen weitere Viergelenke, insgesamt mit 27 und 28 bezeichnet, wobei eine weitere Steuerstange 29 für das letzte Viergelenk 28 vorgesehen ist. Das Viergelenk 27 ist gebildet durch die Gelenkpunkte 25, 30, 31, 32; das Viergelenk 28 ist gebildet durch die Gelenkpunkte 31, 33, 34 und 35. Die Bewegung der drei Dachteile 5, 7, 8 verläuft somit völlig synchron und durch die genannten Lenker zwangsgesteuert.

Am Ende der ersten Bewegungsphase (Fig. 3) liegen die Dachteile 5, 7, 8 ineinander geschachtelt. Das hintere Dachteil 5 überwölbt die Dachteile 7, 8. Die Heckscheibe 6 weist mit ihrer Außenfläche im wesentlichen nach hinten. Das gesamte Paket aus Dachteilen 5, 7, 8 ist gegenüber der Vertikalen leicht nach hinten geneigt. Insgesamt ist dieses Paket aus Dachteilen 5, 7, 8 an zwei Lenkern 36, 37, die an Gelenken 38, 39 gehalten sind, schwenkbar gegenüber der Karosserie 2. Mit den beiden rückwärtigen Gelenkpunkten 40, 41 eines boomerangförmigen Hebels 42 ist auch hierdurch ein Viergelenk gebildet, mit dem das gesamte Dach 4 gegenüber der Karosserie 2 verlagerbar ist.

In der ersten Bewegungsphase, also im Übergang von Fig. 1 zu Fig. 3, war dieses Viergelenk noch nicht bewegt worden. Die Gelenke 16, 17 für das erste Viergelenk hatten somit ihre Lage gegenüber der Karosserie 2 nicht verändert.

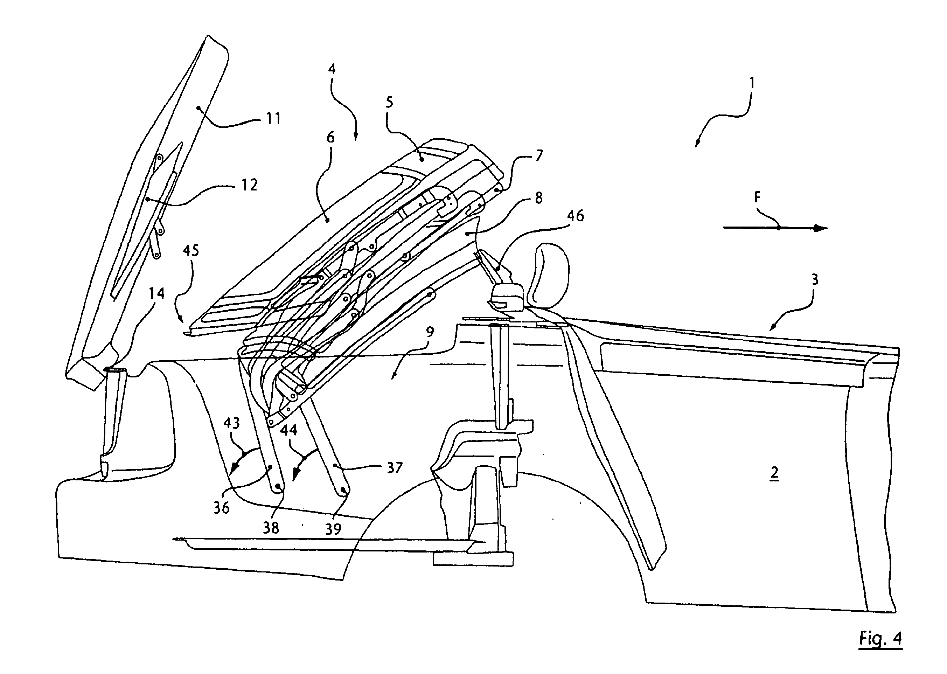

Zum anschließenden Absenken des Daches 4 in seine Packstellung wird das Viergelenk 38, 39, 40, 41 derart geöffnet, daß die Hebel 36, 37 um die Gelenke 38, 39 in Richtung der Pfeile 43, 44 heckwärts und abwärts verschwenken (Fig. 4). Somit gelangt der Gelenkpunkt 40 des Boomeranghebels 42 in eine heckwärts gerichtete Lage und zieht somit den hinteren Dachabschluß 45 nach oben und heckwärts entgegen der Fahrtrichtung F.

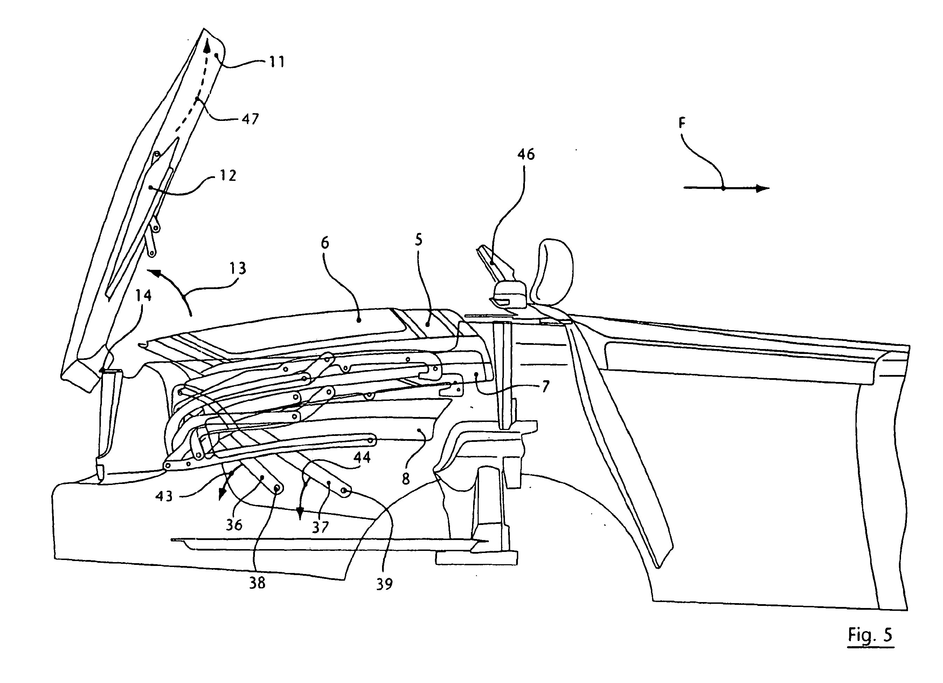

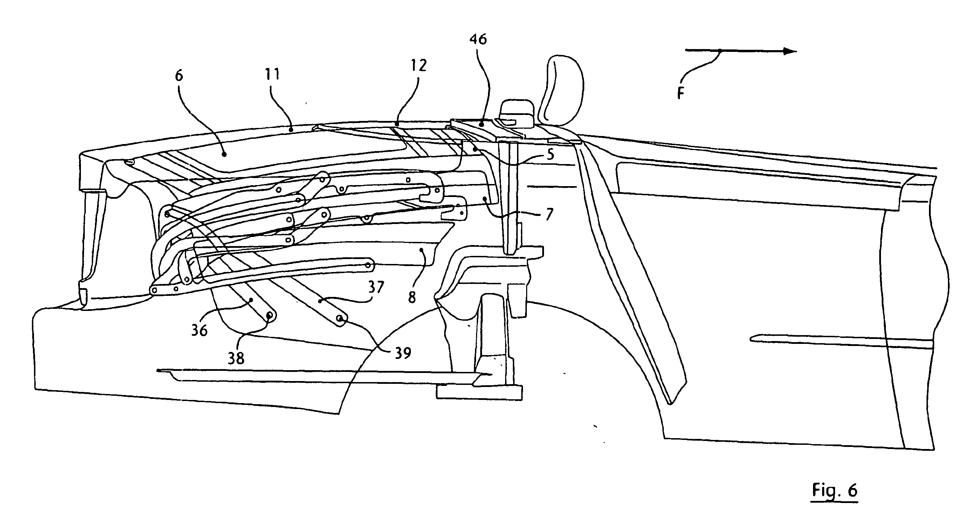

Das abgelegte Dach 4 gelangt damit insgesamt in eine nahezu horizontale Stellung der Teile 5, 7, 8, wobei die Außenseite der Heckscheibe 6 nach oben zeigt. In dieser Packstellung gemäß Fig. 5 kann das Deckelteil 11 entgegen der Richtung des Pfeils 13 geschlossen werden. Zudem kann ein schwenkbarer Teil 46 eine Hutablage, der während der Öffnungsbewegung nahezu aufrecht gestanden hat, in eine Horizontallage verschwenkt werden. Die in Richtung des Pfeils 47 ausfahrbare Erweiterung 12 des Deckelteils 11 kann währenddessen abwärts verschwenken und in eine bündige Lage mit dem Deckelteil 11 und der Hutablage 46 gelangen, so daß sich die in Fig. 6 gezeigte Endstellung bei geöffnetem Dach 4 ergibt.

Zur Freigabe der Durchtrittsöffnung 47 für Gepäck wird das Deckelteil 11 in einem zweiten Öffnungssinn um eine Achse 48 aufgeschwenkt (Fig. 8). Dabei wird die Erweiterung 12 wieder unter das Deckelteil 11 eingefahren, um im vorderen Bereich eine Durchtrittsmöglichkeit für die abgelegten Dachteile 5, 7, 8 durch die Ebene 49 des Deckelteils zu ermöglichen. Das vordere Ende des Deckelteils 11 ist in dem Fall durch die Linie 50 gebildet.

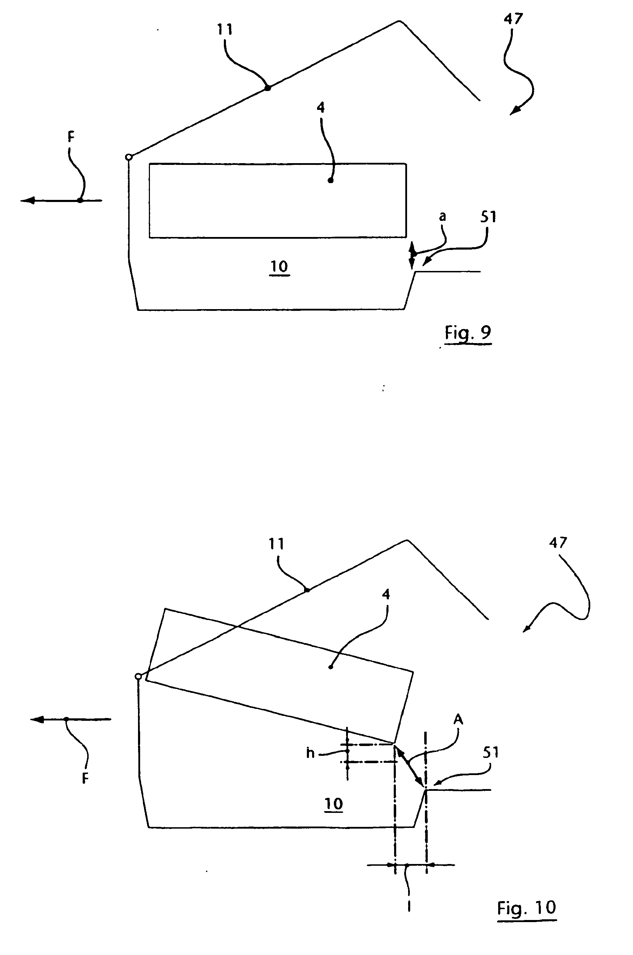

Wie in den Figuren 9 und 10 sichtbar ist, wird durch die Bewegung das Dachpaket 4 nicht nur um den Hub h angehoben, sondern auch um die Länge I in Fahrtrichtung F vorwärts verlagert. Gegenüber einer unbewegten Packstellung des Daches 4 (Fig. 9) ergibt sich somit durch die Bewegung des Dachpakets 4 (Fig. 10) ein deutlich größerer Durchladeabstand A gegenüber einer Stufe 51, die den Kofferraum 10 nach hinten im Bereich einer Stoßstange und eines rückwärtigen Querträgers begrenzt. Somit sind beispielsweise auch sperrige Gepäckstücke, wie etwa Hartschalenkoffer, die an sich unter dem abgelegten Dach 4 bei geschlossenem Deckel 11 platz finden, jedoch durch den Abstand a nach Fig. 9 nicht hindurchpassen würden, aufgrund der Vergrößerung des Durchladeabstandes A problemlos ein- und ausladbar.

Diese Vergrößerung der Erstreckung des Durchladekanals A gegenüber einer unbewegten Dachablage a stellt einen wesentlichen Vorteil der Erfindung dar und beruht darauf, daß das Dachpaket 4 insgesamt über die Lenker 36 und 37 und die Gelenkpunkte 38, 39, 40, 41 an einem Viergelenk in seinem hinteren Bereich gehalten ist. Insbesondere bringt dies gegenüber einer reinen Schwenkhalterung des Daches 4 deutliche Vorteile.

## Patentansprüche

1. Cabriolet-Fahrzeug (1) mit einem zumindest zwei, jeweils starre Dachteile (5; 7; 8) umfassenden Dach (4), die zum Öffnen des Daches ineinander schachtelbar und im rückwärtigen Fahrzeugbereich in einem Dachaufnahmeraum (9) ablegbar sind, wobei der Dachaufnahmeraum (9) von einem zur Freigabe einer Durchtrittsöffnung für das Dach aufschwenkbaren Deckelteil (11) oberseitig abdeckbar ist und wobei ein rückwärtiges, ein Heckfenster (6) umfassendes Dachteil (5) in Ablagestellung des Daches oberhalb des oder der weiteren Dachteil(e) (7; 8) in einer im wesentlichen horizontalen Lage gehalten ist und wobei die in geschlossenem Zustand die Außenseite des Heckfensters (6) bildende Fläche nach oben weist, wobei die Dachteile (5; 7; 8) zu ihrer Öffnung in einer ersten Bewegungsphase ingesamt aufschwenken und gleichzeitig in eine ineinander verschachtelte, gegenüber einer vertikalen Fahrzeugquerebene nur wenig geneigte Stellung bewegbar sind wobei am Ende dieser Bewegungsphase die Dachtele (5; 7; 8) derart geschachtelt sind, daß ihre Wölbungen gleichsinnig ineinander liegen und wobei das oder die weitere/n Dachteile (7; 8) von dem das Heckfenster (6) umfassende Dachteil (5), das konvex gewölbt ist, rückseitig umfaßt sind, und in dieser geschachtelten Stellung in eine Ablagestellung verlagerbar sind, wobei die Dachteile (5; 7; 8) in die Ablagestellung im wesentlichen horizontal liegen, wobei zu Beginn eines Ablagevorganges das im wesentlichen vertikal ausgerichtete Dach (4) durch die Durchtrittsöffnung zu bewegen ist und erst im Verlaufe der Ablagebewegung durch die Durchtrittsöffnung hindurch in die horizontale Ablagestellung gebracht wird, wobei die Dachteile (5; 7; 8) aus der geschachtelten Zwischenstellung (Fig. 3) durch Verschwenken und eine entgegen der Fahrtrichtung (F) erfolgende Längsbewegung in die horizontale Ablagestellung überführbar sind, wobei zur Vermittlung der Schwenkbewegung und der Längsbewegung die geschachtelten Dachteile (5; 7; 8) ingesamt an einem Viergelenk (28; 29; 40; 41) gegenüber der Fahrzeugkarosserie (2) gehalten sind, welches in der ersten Bewegungsphase nicht bewegt wird und zum anschließenden Ablegen der geschachtelten Dachteile (5; 7; 8) in die Ablagestellung das Viergelenk (38, 39, 40, 41) mit Hebeln (36, 37) derart geöffnet wird, daß die Hebel (36, 37) um zwei Gelenke (38, 39) des Viergelenks (38; 39; 40; 41) heckwärts und abwärts verschwenken.

2. Cabriolet-Fahrzeug nach Anspruch 1, **dadurch gekennzeichnet, daß** die Dachteile (5;7;8) untereinander verbunden sind und lediglich das hintere Dachteil (5) eine Verbindung zur Fahrzeugkarosserie (2) aufweist.

3. Cabriolet-Fahrzeug nach Anspruch 1 oder 2, **dadurch gekennzeichnet, daß** das Cabriolet-Fahrzeug (1) drei starre Dachteile (5;7;8) umfaßt, die bei geschlossenem Dach (4) voreinander und bei geöffnetem Dach übereinander liegen.

4. Cabriolet-Fahrzeug nach einem der Ansprüche 1 bis 3, **dadurch gekennzeichnet, daß** der Dachaufnahmeraum (9) oberseitig von einem Deckelteil (11) abdeckbar ist, das in einem ersten Öffnungssinn zur Freigabe der Durchtrittsöffnung für das Dach und in einem zweiten Öffnungssinn zur Freigabe einer Aufnahmeöffnung (47) für Gepäck geöffnet werden kann.

5. Cabriolet-Fahrzeug nach Anspruch 4, **dadurch gekennzeichnet, daß** bei Öffnung des Deckelteils (11) in Fahrtrichtung zur Freigabe der Aufnahmeöffnung (47) für Gepäck das bei geöffnetem Dach in einer horizontalen Ablagestellung gehaltene Dach (4) aufwärts in Richtung der gegenüber einer vertikalen Fahrzeugquerebene nur wenig geneigten Stellung der Dachteile (5;7;8) beweglich ist.

6. Cabriolet-Fahrzeug nach Anspruch 5, **dadurch gekennzeichnet, daß** das in Ablagestellung (4) befindiiche Dach über das Viergelenk (38;39;40;41) mit seinem vorderen Ende aufwärts verschwenkbar und gleichzeitig in Fahrtrichtung (F) vorwärts verlagerbar ist

## Claims

1. Convertible vehicle (1) having a roof (4) comprising at least two roof parts (5, 7, 8) each of which is rigid, which roof parts (5, 7, 8), for the lowering of the roof, can be nested into one another and can be stowed in the rear part of the vehicle in a roof-receiving space (9), the roof-receiving space (9) being able to be covered at the top by a cover part (11) which can be pivoted up to open an opening for the roof to pass through, and a rear roof part (5) which comprises a rear window (6) being held in a substantially horizontal position above the other roof part or parts (7, 8) when the roof is in the stowed position and the surface which forms the outside of the rear window (6) in the raised state being directed upwards, wherein, for them to be lowered, in a first phase of movement the roof parts (5, 7, 8), as a whole, pivot up and at the same time can be moved to a position in which they are nested in one another and are only slightly inclined to a vertical transverse plane of the vehicle, the roof parts (5, 7, 8) being so nested at the end of this phase of movement that their curves rest in one another in the same direction, and the other roof part or parts (7, 8) being enclosed at the rear by the part (5) comprising the rear window (6), the curvature of which part (5) is convex, and, in this nested position, the roof parts (5, 7, 8) being able to be moved to a stowed position, and wherein the roof parts (5, 7, 8) lie substantially horizontal in the stowed position, the roof (4) being moved, at the beginning of a stowing operation, when it is substantially vertically aligned, through the opening for passage to the horizontal stowed position, the roof parts (5, 7, 8) being able to be transferred from the nested intermediate position (Fig. 3) to the horizontal stowed position by pivoting and by a longitudinal movement which takes place in the opposite direction to the direction of travel (F), the nested roof parts (5, 7, 8), to allow the pivoting movement and longitudinal movement to be imparted, being held as a whole relative to the bodywork (2) of the vehicle on a four-bar linkage (38, 39, 40, 41) which is not moved in the first phase of movement and, to then allow the nested roof parts (5, 7, 8) to be stowed to the stowed position, the four-bar linkage (38, 39, 40, 41), having levers (36, 37), being opened in such a way that the levers (36, 37) pivot to the rear and downwards about two hinge-points (38, 39) belonging to the four-bar linkage (38, 39, 40, 41).

2. Convertible vehicle according to claim 1, **characterised in that** the roof parts (5, 7, 8) are connected together and only the rear roof part (5) has a connection to the bodywork (2) of the vehicle.

3. Convertible vehicle according to claim 1 or 2, **characterised in that** the convertible vehicle (1) comprises three rigid roof parts (5, 7, 8) which are situated one in front of the other when the roof (4) is raised and are situated one above the other when the roof is lowered.

4. Convertible vehicle according to one of claims 1 to 3, **characterised in that** the roof-receiving space (9) can be covered at the top by a cover part (11) which can be opened in a first direction of opening to open the opening for the roof to pass through and which can be opened in a second direction of opening to open a receiving opening (47) for luggage.

5. Convertible vehicle according to claim 4, **characterised in that,** when the cover part (11) is opened in the direction of travel to open the receiving opening (47) for luggage, the roof (4), which is held in a horizontal stowed position when the said roof is lowered, can be moved upwards towards the position where the roof parts (5, 7, 8) are only slightly inclined to a vertical transverse plane of the vehicle.

6. Convertible vehicle according to claim 5, **characterised in that** the roof, when situated in the stowed position (4), can be pivoted upwards at its front end and at the same time can be moved forwards in the direction of travel (F), by means of the four-bar linkage (38, 39, 40, 41).

## Revendications

1. Véhicule cabriolet (1) dont le toit (4) comprend au moins deux parties rigides de toit (5 ; 7 ; 8), pouvant être emboîtées l'une dans l'autre pour ouvrir le toit et être déposées dans un espace de rangement de toit (9) à la partie arrière du véhicule,
- le dessus de l'espace de rangement de toit (9) pouvant être couvert par un capot (11) basculant dans le sens de l'ouverture pour libérer l'orifice de passage du toit,
- une partie arrière de toit (5) comportant une lunette arrière (6), étant maintenue en position de dépose du toit, au-dessus de la ou des autres partie(s) de toit (7 ; 8) dans une position pratiquement horizontale,
- la surface qui en position fermée constitue le côté extérieur de la lunette arrière (6) restant dirigée vers le haut,
- les parties de toit (5 ; 7 ; 8) basculant conjointement dans le sens de l'ouverture au cours d'une première phase de mouvement et se déplaçant en même temps dans une position emboîtée, seulement faiblement inclinée par rapport à un plan transversal vertical du véhicule,
- à la fin de cette phase de mouvement, les parties de toit (5 ; 7; 8) étant emboîtées de manière que leurs cintrages soient les uns dans les autres dans le même sens,
- là où les autres partie(s) de toit (7 ; 8) étant entourées du côté arrière par la partie de toit (5) comportant la lunette arrière (6) qui est bombée de manière convexe et se mettant dans cette position emboîtée dans une position de rangement de façon que les parties de toit (5 ; 7 ; 8) soient pratiquement horizontales en position de rangement,
- au début d'une phase de rangement, le toit (4) pratiquement dirigé verticalement, passant par l'ouverture pour être mis dans la position de rangement horizontale,
- les parties de toit (5 ; 7 ; 8) étant mises de leur position intermédiaire emboîtée (figure 3), par pivotement puis mouvement longitudinal dans la direction opposée à la direction de déplacement (F), dans la position horizontale de rangement, et
- pour assurer le mouvement de pivotement et le mouvement longitudinal, les parties de toit (5 ; 7 ; 8) sont maintenues conjointement dans un quadrangle articulé (38 ; 39 ; 40 ; 41) par rapport à la carrosserie (2) du véhicule, ce quadrangle restant immobile au cours de la première phase de mouvement et étant ensuite ouvert pour la dépose des parties de toit (5 ; 7 ; 8) imbriquées en position de rangement, avec des leviers (36, 37) de façon que les leviers (36, 37) pivotent autour de deux articulations (38, 39) du quadrangle articulé (38 ; 39 ; 40 ; 41), vers l'arrière en descendant.

2. Véhicule cabriolet selon la revendication 1,
**caractérisé en ce que**
les parties de toit (5 ; 7 ; 8) sont reliées entre elles et seule la partie de toit arrière (5) est reliée à la carrosserie (2) du véhicule.

3. Véhicule cabriolet selon l'une des revendications 1 ou 2,
**caractérisé en ce que**
trois parties de toit rigides (5 ; 7 ; 8) se trouvent l'une devant l'autre lorsque le toit est fermé (4) et l'une au-dessus de l'autre lorsque le toit est ouvert.

4. Véhicule cabriolet selon l'une des revendications 1 à 3,
**caractérisé en ce que**
le dessus de l'espace (9) recevant le toit peut être recouvert d'un capot (11) qui peut être ouvert dans un premier sens d'ouverture pour dégager l'ouverture de passage du toit et dans un deuxième sens d'ouverture pour dégager une ouverture de réception (47) des bagages.

5. Véhicule cabriolet selon la revendication 4,
**caractérisé en ce que**
lors de l'ouverture du capot (11) dans la direction de déplacement pour libérer l'ouverture de réception (47) des bagages,
le toit (4), maintenu en position horizontale de dépose lorsqu'il est ouvert, est mobile vers le haut dans une position des parties de toit (5 ; 7 ; 8) seulement faiblement inclinée par rapport à la direction d'un plan transversal vertical du véhicule.

6. Véhicule cabriolet selon la revendication 5,
**caractérisé en ce qu'**
le toit en position rangement (4) peut pivoter son extrémité avant vers le haut à l'aide du quadrangle articulé (38 ; 39 ; 40 ; 41) et être en même temps déplacé vers l'avant dans le sens de la marche (F).
